(19)

Europäisches
Patentamt
European
Patent Office
Office européen
des brevets

(11) **EP 2 554 873 A1**

(12) **EUROPEAN PATENT APPLICATION**
published in accordance with Art. 153(4) EPC

<table>
<tr><td>(43) Date of publication:<br>06.02.2013 Bulletin 2013/06</td><td>(51) Int Cl.:<br><i>F16H 3/66</i> <sup>(2006.01)</sup></td></tr>
<tr><td>(21) Application number: 11762304.1</td><td>(86) International application number:<br>PCT/JP2011/050520</td></tr>
<tr><td>(22) Date of filing: 14.01.2011</td><td>(87) International publication number:<br>WO 2011/122063 (06.10.2011 Gazette 2011/40)</td></tr>
</table>

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 29.03.2010 JP 2010074944

(71) Applicant: Jatco Ltd
Fuji-shi, Shizuoka 417-8585 (JP)

(72) Inventors:
• MATSUBARA, Masami
Fuji-shi
Shizuoka 417-8585 (JP)

• UNNO, Takehiro
Fuji-shi
Shizuoka 417-8585 (JP)
• IDEBUCHI, Koji
Fuji-shi
Shizuoka 417-8585 (JP)

(74) Representative: Schaeberle, Steffen
Hoefer & Partner
Patentanwälte
Pilgersheimer Strasse 20
81543 München (DE)

(54) **VEHICLE SPEED REDUCTION DEVICE**

(57) A vehicular reduction unit is provided with a planetary gear mechanism including a sun gear, a stepped pinion in which a first gear engaged with the sun gear and a second gear having fewer teeth than the first gear are connected on the same shaft, a first ring gear engaged with the first gear, a second ring gear engaged with the second gear and a carrier for outputting orbital motion of the stepped pinion, a case for housing the planetary gear mechanism, a first brake and a second brake. Rotation of the carrier is output when either one of the first brake and the second brake is in an engaged state.

*Fig.1*

EP 2 554 873 A1

**Description**

TECHNICAL FIELD

The present invention relates to a vehicular reduction unit for driving a vehicle by decelerating and transmitting drive power from a drive power source to axles.

BACKGROUND OF THE INVENTION

In a vehicle driven by a drive power source composed of an internal combustion engine, a motor and the like, a large torque is necessary at the time of starting the vehicle. Thus, a reduction mechanism is necessary to cause an increased torque to act on wheels.

Particularly, in a so-called EV (Electric Vehicle) using a motor driven by electric energy as a drive power source, a large reduction ratio (about 10.0) is required to ensure vehicle startability. In a conventional reduction mechanism, it has been a general practice to increase a distance between supporting shafts for gears at an input side and an outpour side by increasing a gear ratio or to use three or more shafts in order to satisfy a large reduction ratio.

However, since such a configuration enlarges the size of an entire unit including the reduction mechanism, there have been problems such as a weight increase, poor vehicle mountability and a cost increase.

Further, since the motor rotates at a high speed during high-speed running, there arise problems such as a cost increase caused by increasing the capacity of an inverter for driving the motor and an efficiency reduction caused by high-speed rotation. Thus, a reduction mechanism is required to have a mechanism capable of changing a reduction ratio.

With respect to such problems, the distance between the supporting shafts can be reduced by using a planetary gear mechanism as the reduction mechanism.

As a reduction mechanism using a planetary gear mechanism, there is known a two-speed gear transmission including an input shaft integrally formed with a sun gear, a main shaft to which a carrier is connected, a planetary gear mechanism, a first clutch which sets a high speed by being switched from an off-state to an on-state, a second clutch which is provided at an outer side of the first clutch and sets a low speed by being switched from an off-state to an on-state, and a first hydraulic piston and a second hydraulic piston which on-off control the first and second clutches (JP04-117950U).

SUMMARY OF THE INVENTION

A planetary gear mechanism as disclosed in the above prior art switches a gear position by engaging and disengaging a clutch to change a combination of input and output shafts, a sun gear, a carrier and a ring gear.

However, a hydraulic pressure is necessary to engage and disengage the clutch. A hydraulic pump needs to be driven as a hydraulic pressure supply source in an EV. The hydraulic pump needs to be constantly actuated to maintain a pressure when the clutch is engaged. This leads to problems such as higher power consumption and a reduction in energy efficiency.

It is also thought to engage the clutch by a mechanical actuator such as a motor or a solenoid without using a hydraulic pressure. However, a mechanism including a cam and a link becomes complicated to mechanically operate the clutch in which rotating bodies are engaged with each other, which leads to problems such as size enlargement and a cost increase.

The present invention was developed in view of such problems and aims to provide a vehicular reduction unit capable of realizing a reduction mechanism which can prevent a reduction in energy efficiency without enlarging size.

One aspect of the present invention is directed to a vehicular reduction unit, comprising a planetary gear mechanism including a sun gear connected to an input shaft to which drive power from a drive power source is input, a stepped pinion in which a first gear engaged with the sun gear and a second gear having fewer teeth than the first gear are connected on the same shaft, a first ring gear engaged with the first gear of the stepped pinion, a second ring gear engaged with the second gear of the stepped pinion and a carrier connected to the stepped pinion and adapted to output orbital motion of the stepped pinion; a case for housing the planetary gear mechanism; a first brake for stopping rotation of the first ring gear; and a second brake for stopping rotation of the second ring gear, wherein rotation of the carrier is output when either one of the first brake and the second brake is in an engaged state.

According to the above aspect, by a simple configuration using the planetary gear mechanism, a reduction mechanism with two reduction gear positions can be configured while the input and output shafts are formed by one shaft. Thus, the vehicular reduction unit can be miniaturized. Further, since the engaged states of the first and second ring gears are controlled by the first and second brakes for stopping rotation thereof relative to the case, the engaged states can be controlled without depending on a hydraulic control and a reduction in vehicle energy efficiency can be prevented.

The details as well as other features and advantages of this invention are set forth in the remainder of the specification and are shown in the accompanying drawings.

BRIEF DESCRIPTION OF THE DRAWINGS

FIG. 1 is a diagram of a vehicular reduction unit of a first embodiment of the present invention,
FIG. 2A is a diagram at the time of a low mode of the vehicular reduction unit of the first embodiment of the present invention,
FIG. 2B is a diagram at the time of the low mode of the vehicular reduction unit of the first embodiment of the present invention,
FIG. 3A is a diagram at the time of a high mode of the vehicular reduction unit of the first embodiment of the present invention,
FIG. 3B is a diagram at the time of the high mode of the vehicular reduction unit of the first embodiment of the present invention,
FIG. 4 is a diagram of a vehicular reduction unit of a second embodiment of the present invention.

DESCRIPTION OF THE EMBODIMENTS

Hereinafter, embodiments of the present invention are described with reference to the drawings.

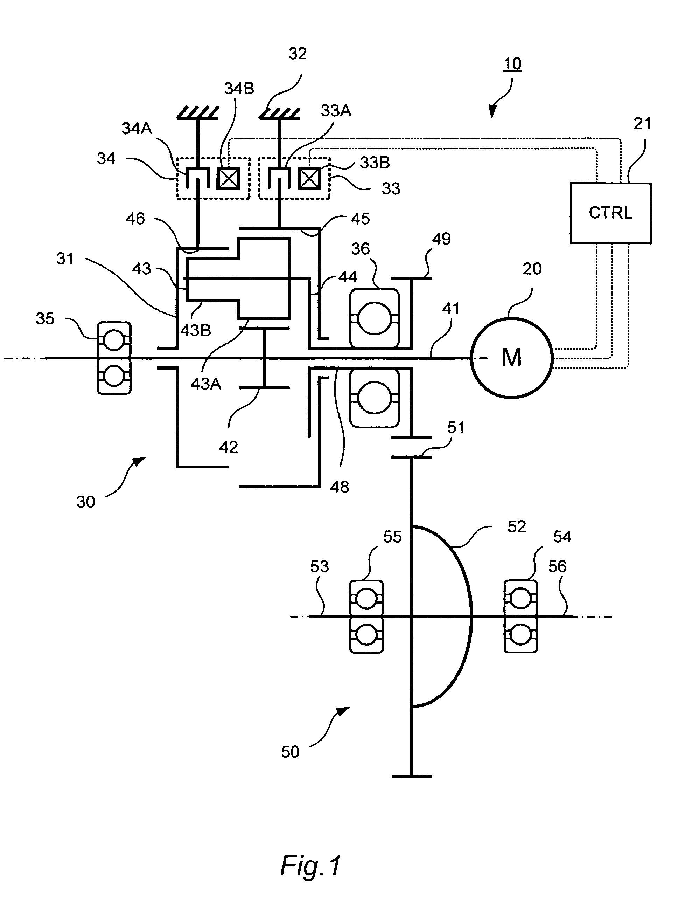

FIG. 1 is a diagram of a vehicular reduction unit 10 of a first embodiment of the present invention.

The vehicular reduction unit 10 includes a motor 20 as a drive power source, a reduction mechanism 30 with a planetary gear mechanism 31 and a final reduction mechanism for outputting decelerated drive power to axles.

The motor 20 receives the supply of electric power by a control device 21 and rotates to generate drive power. The motor 20 is, for example, a brushless motor having three phases. The control device 21 supplies electric power to the motor 20, for example, by a PWM control using an inverter, thereby controlling the drive power of the motor 20.

The control device 21 controls engaged states of a low brake 34 and a high brake 33 to be described later.

The reduction mechanism 30 is composed of a planetary gear mechanism 31 and the like housed in a case 32. The reduction mechanism 30 decelerates drive power input to an input shaft 41 by the planetary gear mechanism 31 and transmits the decelerated drive power to the final reduction mechanism 50 via an output shaft 48 and an output-side gear 49. The final reduction mechanism 50 includes a differential mechanism 52 which permits deferential of left and right wheels, and transmits the drive power to a left axle 53 and a right axle 54.

The planetary gear mechanism 31 includes a sun gear 42 connected to the input shaft 41, a pinion 43 engaged with the sun gear 42, a first ring gear 45 and a second ring gear 46 engaged with the pinion 43.

The sun gear 42 is connected to the input shaft 41 to which the drive power of the motor 20 is input, and rotates together with the input shaft 41.

The pinion 43 is a so-called stepped pinion in which a first gear 43A engaged with the sun gear 42 and a second gear 43B having fewer teeth than the first gear 43A are coaxially arranged. The pinion 43 includes the first gear 43A on the motor 20 side (front side) and the second gear 43B on a side opposite to the motor 20 (rear side).

A carrier 44 for transmitting orbital motion of the pinion 43 to the output shaft 48 side is provided at a front side of the pinion 43. The carrier 44 is connected to the output shaft 48.

The output shaft 48 is formed as a hollow shaft, through the interior of which the input shaft 41 passes, and is connected to the output-side gear 49. The input shaft 41 is supported by a bearing 35 and the output shaft 48 is supported by a bearing 36.

The first ring gear 45 is engaged with the first gear 43A of the pinion 43. The second ring gear 46 is provided behind the first ring gear 45 and engaged with the second gear 43B of the pinion 43.

The case 32 includes the high brake 33 for stopping relative rotation of the first ring gear 45 and the case 32. Further, the case 32 includes the low brake 34 for stopping relative rotation of the second ring gear 46 and the case 32.

The high brake 33 is composed of a first friction element 33A connected to the case 32 and the first ring gear 45 respectively and a first actuator 33B for pressing the first friction element 33A to engage the high brake 33.

The low brake 34 is composed of a second friction element 34A connected to the case 32 and the second ring gear 46 respectively and a second actuator 34B for pressing the second friction element 34A to engage the low brake 34.

The first and second actuators 33B, 34B are fixed to the case 32 and composed of functional components for converting electrical energy into mechanical motion such as a motor and a solenoid.

The first and second actuators 33B, 34B can set the high brake 33 or the low brake 34 in an engaged state or a disengaged state by pressing or releasing the first friction element 33A or the second friction element 34A based on a control signal output from the control device 21.

By employing such a configuration, when the high brake 33 is engaged, the first ring gear 45 is connected to the case 32 and the high brake 33 stops rotating. When the low brake 34 is engaged, the second ring gear 46 is connected to the case 32 and the low brake 34 stops rotating.

The output-side gear 49 is engaged with the gear 51 of the final reduction mechanism 50. Drive power of the gear 51 is transmitted to the left and right axles 53, 54 by the differential mechanism 52 with a differential allowed. The left and right axles 53, 54 are respectively supported by bearings 55, 56.

The operation of the thus configured reduction mechanism 30 of the first embodiment of the present invention is described.

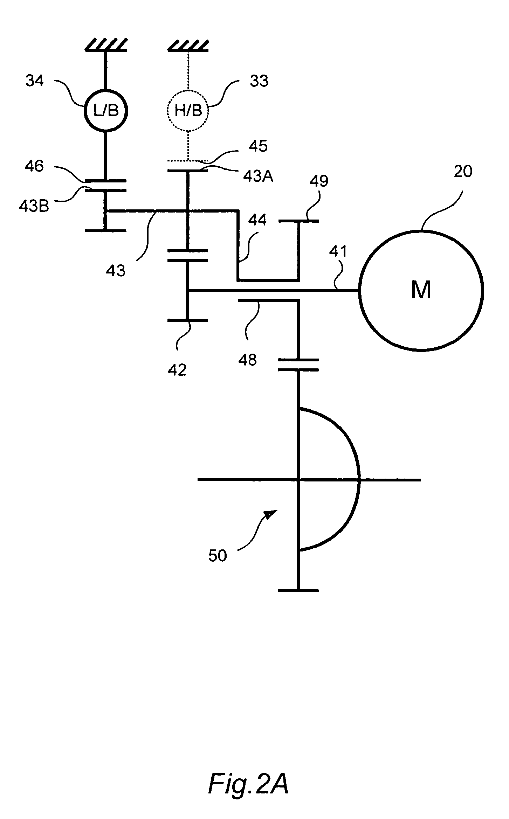

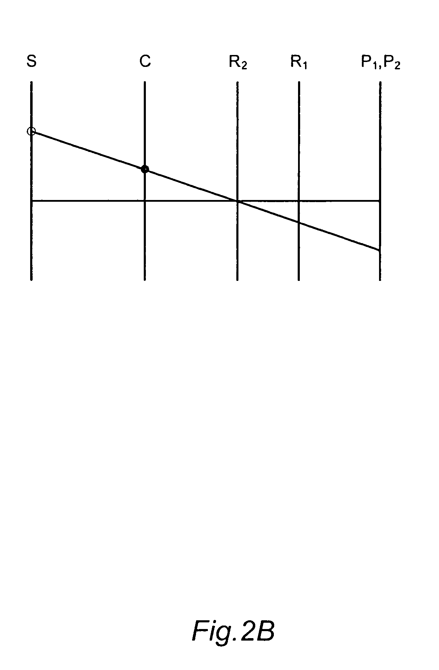

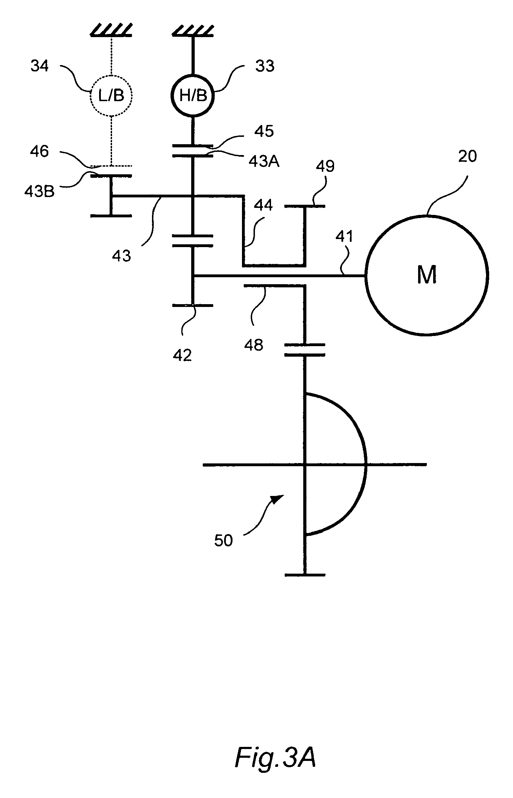

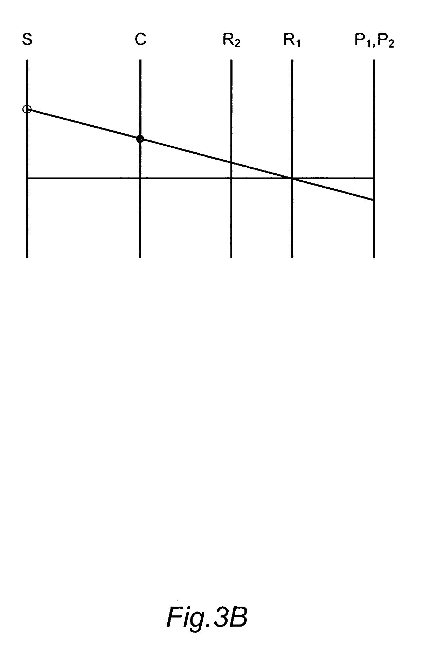

FIGS. 2A, 2B, 3A and 3B are diagrams showing the operation of the reduction mechanism 30 of the first embodiment of the present invention.

The reduction mechanism 30 of this embodiment can change a reduction ratio by controlling either one of the high brake 33 and the low brake 34 to be in the engaged state.

FIG. 2A shows a state of the reduction mechanism 30 when the high brake 33 is set in the disengaged state and the low brake 34 is set in the engaged state by a control of the control device 21. In this embodiment, this state is called a "low mode".

In the low mode, the second ring gear 46 is set in a non-rotational state by setting the low brake 34 in the engaged state.

In the low mode, drive power input to the sun gear 42 is transmitted to the pinion 43 by the first gear 43A. The pinion 43 rotates in accordance with the second ring gear 46 in the non-rotational state, and orbital motion of the pinion 43 is transmitted to the carrier 44. Drive power transmitted to the carrier 44 is transmitted from the output shaft 48 to the final reduction mechanism 50.

Since the high brake 33 is released and the first ring gear 45 is in a rotatable state in the low mode, the first ring gear 45 is not involved in deceleration in the planetary gear mechanism 31.

FIG. 2B is a collinear diagram of the planetary gear mechanism 31 in the low mode. In FIG. 2B, S denotes the sun gear 42, C denotes the carrier 44, R1 denotes the first ring gear 45, R2 denotes the second ring gear 46, P1 denotes the first gear 43A of the pinion 43 and P2 denotes the second gear 43B of the pinion 43, respectively.

Since rotation of the second ring gear 46 is fixed in the low mode, a reduction ratio between a rotational force input to the input shaft 41 and that output from the output shaft is calculated from the numbers of teeth of the sun gear 42, the second ring gear 46 and the first and second gears 43A, 43B of the pinion 43.

The reduction ratio between the input shaft 41 and the output shaft 48 in the low mode is:

1:(1+(number of teeth of the second ring gear 46/number of teeth of the second gear 43B)*(number of teeth of the first gear 43A/number of teeth of the sun gear 42).

The drive power decelerated at this reduction ratio is output to the output shaft 48.

FIG. 3A shows a state of the reduction mechanism 30 when the high brake 33 is set in the engaged state and the low brake 34 is set in the disengaged state by a control of the control device 21. In this embodiment, this state is called a "high mode".

In the high mode, the first ring gear 45 is set in a non-rotational state by setting the high brake 33 in the engaged state.

In the high mode, drive power input to the sun gear 42 is transmitted to the pinion 43 by the first gear 43A. The pinion 43 rotates in accordance with the first ring gear 45 in the non-rotational state, and orbital motion of the pinion 43 is transmitted to the carrier 44. Drive power transmitted to the carrier 44 is transmitted from the output shaft 48 to the final reduction mechanism 50.

Since the low brake 34 is released and the second ring gear 46 is in a rotatable state in the high mode, the second ring gear 46 is not involved in deceleration in the planetary gear mechanism 31.

FIG. 3B is a collinear diagram of the planetary gear mechanism 31 in the high mode.

Since rotation of the first ring gear 45 is fixed in the high mode, a reduction ratio between the drive power input to the input shaft 41 and that output from the output shaft is calculated from a relationship of the sun gear 42 and the first ring gear 45.

The reduction ratio between the input shaft 41 and the output shaft 48 in the high mode is:

1:(1+(number of teeth of the first ring gear 45 / number of teeth of the sun gear 42)).

The drive power decelerated at this reduction ratio is output to the output shaft 48.

Accordingly, a switch to a different reduction ratio can be made by selectively engaging either one of the high brake 33 and the low brake 34.

Particularly, the reduction ratio in the low mode can be made larger than in the high mode by selecting the number of teeth of the pinion 43 in the case of using the second ring gear 46.

For example, in the vehicle using the motor 20 as a drive power source, a switch is made to the low mode at startup to increase the reduction ratio and ensure startability. During high-speed cruising, a control can be executed to make the reduction ratio smaller than in the low mode, suppress an increase in the rotation speed of the motor 20 and prevent a reduction in energy efficiency by making a switch to the high mode.

As a specific example, it is preferable to set the reduction ratio of the low mode at about 10.0, set the reduction ratio of the high mode at 5.0 and set a step ratio between the low mode and the high mode at about 2.0.

As described above, the vehicular reduction unit 10 of the first embodiment of the present invention includes the planetary gear mechanism 31 composed of the sun gear 42, the pinion 43 in which the first gear 43A engaged with the sun gear 42 and the second gear 43B having fewer teeth than the first gear 43A are coaxially arranged, the first ring gear 45 engaged with the first gear 43A and the second ring gear 46 engaged with the second gear 43B.

The vehicular reduction unit 10 includes the high brake 33 for stopping rotation of the first ring gear 45 relative to the case 32 and the low brake 34 for stopping rotation of the second ring gear 46 relative to the case 32.

Since the output of the motor 20 as the drive power source can be decelerated and output using one shaft by such a configuration, miniaturization and weight saving of the vehicular reduction unit 10 are possible. Further, since the number of components and the number of assembling steps can be reduced, production cost can be reduced.

Further, since the reduction ratio can be switched by stopping rotation of either one of the first ring gear 45 and the second ring gear 46 by the high brake 33 and the low brake 34, efficiency of the motor 20 and the control device 21 can be increased and vehicle energy efficiency can be improved by switching the reduction ratio at vehicle startup and during high-speed running.

Further, a large reduction ratio can be set by the planetary gear mechanism 31. Further, since a degree of freedom of the step ratio is increased by changing the numbers of teeth of the pinion 43, the first ring gear 45 and the second ring gear 46, it is possible to improve drive power performance of the vehicle and improve energy efficiency.

Further, the high brake 33 and the low brake 34 are respectively composed of the friction element 33A, 34A and the actuator 33B, 34B fixed to the case 32, movable parts can be made non-rotatable. Since the number of components can be reduced without complicating the configuration by employing such a configuration, production cost can be reduced. Further, since the weight of the vehicular reduction unit 10 can be reduced, vehicle energy efficiency can be improved.

Further, since a clutch used to engaging and disengaging drive power between rotating bodies is conventionally composed of bodies which rotate relative to each other, it is a general practice to use a hydraulic pressure for a control of an engagement force of the clutch. However, the EV using the motor 20 as the drive power source requires a pump, a motor and the like to generate a hydraulic pressure, which leads to an increase in the friction of the motor 20 and a loss of the amount of power usage.

Contrary to this, since the high brake 33 and the low brake 34 do not require a hydraulic operation in the vehicular reduction unit 10 of this embodiment, the amount of power usage of the vehicle can be reduced and friction caused by driving a hydraulic pump is not generated, wherefore vehicle energy efficiency can be improved.

Further, the vehicular reduction unit of this embodiment can fix the output shaft by engaging both the first ring gear 45 and the second ring gear 46 by the high brake 33 and the low brake 34. In the case of employing such a configuration, the vehicular reduction unit 10 can function as a parking brake.

Next, a second embodiment of the present invention is described.

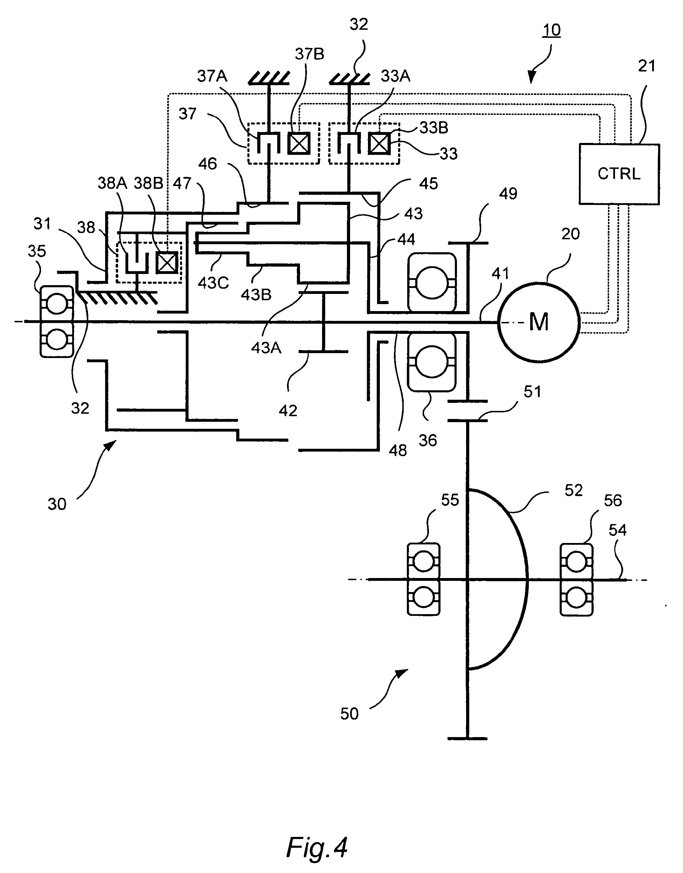

FIG. 4 is a diagram of a vehicular reduction unit 10 of the second embodiment of the present invention. The same components as in the first embodiment are denoted by the same reference signs and are not described.

In the second embodiment, a pinion 43 includes a third gear 43C having even fewer teeth than a second gear 43B and further includes a third ring gear 47 engaged with a third gear 43C.

A case 32 includes a high brake 33 (first friction element) for stopping relative rotation of a first ring gear 45 and the case 32. Further, the case 32 includes a mid brake 37 (third friction element) for stopping relative rotation of a second ring gear 46 and the case 32. Further, the case 32 includes a low brake 38 (second friction element) for stopping relative rotation of the third ring gear 47 and the case 32.

The mid brake 37 and the low brake 38 are composed of a friction element 37A, 38A which is connected to the case 32 and the ring gear respectively and an actuator 37B, 38B which presses the friction element 37A, 38A to engage the mid brake 37 or the low brake 38 as in the first embodiment described above.

In a thus configured reduction mechanism 30 of the second embodiment of the present invention, a state where the high brake 33 and the mid brake 37 are set in a disengaged state and the low brake 38 is set in an engaged state by a control of a control device 21 is called a "low mode" in this embodiment.

In the low mode, the third ring gear 47 is set in a non-rotational state by setting the low brake 38 in the engaged state. In the low mode, the pinion 43 rotates in accordance with the third ring gear 47 in the non-rotational state, and orbital motion of the pinion 43 is transmitted to a carrier 44. Drive power transmitted to the carrier 44 is transmitted from an output shaft 48 to a final reduction mechanism 50.

Further, a state where the high brake 33 and the low brake 38 are set in the disengaged state and the mid brake 37 is set in the engaged state by a control of the control device 21 is called a "mid mode" in this embodiment.

In the mid mode, the second ring gear 46 is set in the non-rotational state by setting the mid brake 37 in the engaged state. In the mid mode, the pinion 43 rotates in accordance with the pinion 43 in the non-rotational state, and orbital motion of the second ring gear 46 is transmitted to the carrier 44. Drive power transmitted to the carrier 44 is transmitted from the output shaft 48 to the final reduction mechanism 50.

Further, a state where the mid brake 37 and the low brake 38 are set in the disengaged state and the high brake 33 is set in the engaged state by a control of the control device 21 is called a "high mode" in this embodiment.

In the high mode, the first ring gear 45 is set in the non-rotational state by setting the high brake 33 in the engaged state. In the high mode, the pinion 43 rotates in accordance with the pinion 43 in the non-rotational state, and orbital motion of the first ring gear 45 is transmitted to the carrier 44. Drive power transmitted to the carrier 44 is transmitted from the output shaft 48 to the final reduction mechanism 50.

As just described, the reduction mechanism 30 with three gear positions can be configured by a combination of the pinion 43, the ring gears (first ring gear 45, second ring gear 46 and third ring gear 47) and the brakes (high brake 33, low brake 34 and mid brake 37).

In the thus configured second embodiment, the output of the motor 20 as the drive power source can be decelerated and output using one shaft as in the first embodiment described above. Thus, the vehicular reduction unit can be miniaturized and the weight of the vehicular reduction unit 10 can be reduced, wherefore vehicle energy efficiency can be improved.

Further, since the reduction ratio of the reduction mechanism 30 can be switched in three steps in the second embodiment, efficiency of the motor 20 and the control device 21 can be increased and vehicle energy efficiency can be improved by appropriately switching the reduction ratio according to a driving condition such as vehicle startup, normal running and high-speed running.

Although the EV using the motor 20 as the drive power source has been described in the embodiments of the present invention, there is no limitation to this configuration. The present invention can be similarly applied also to a vehicle using an internal combustion engine such as an engine as a drive power source. Also in a vehicle using an internal combustion engine as a drive power source, there is an advantage of being able to increase fuel efficiency and being low in cost by miniaturization and weight saving.

Further, although the brakes (high brake 33, low brake 34 and mid brake 37) have been described as so-called multi-disc brakes each composed of a friction element and an actuator in the embodiments of the present invention, the brakes may be band brakes for stopping rotation of a ring gear by a tightening force of a band wound on the outer periphery of the ring gear. Further, the actuators may be hydraulically operated.

Further, although the reduction ratio is switched in two steps in the first embodiment and in three steps in the second embodiment, the reduction ratio may be switched in a larger number of steps.

Various modifications and changes are possible within the scope of the technical concept of the present invention without being limited to the embodiments described above and it is apparent that they are also included in the technical scope of the present invention.

The present application claims a priority based on Japanese Patent Application No. 2010-74944 filed with the Japan Patent Office on March 29, 2010, all the contents of which are hereby incorporated by reference.

**Claims**

1. A vehicular reduction unit, comprising:

    a planetary gear mechanism (31) including a sun gear (42) connected to an input shaft (41) to which drive power from a drive power source (20) is input, a stepped pinion (43) in which a first gear (43A) engaged with the sun gear (42) and a second gear (43B) having fewer teeth than the first gear (43A) are connected on the same shaft, a first ring gear (45) engaged with the first gear (43A) of the stepped pinion (43), a second ring gear (46)

engaged with the second gear (43B) of the stepped pinion (43) and a carrier (44) connected to the stepped pinion (43) and configured to output orbital motion of the stepped pinion (43);
a case (32) for housing the planetary gear mechanism (31);
a first brake (33) for stopping rotation of the first ring gear (45); and
a second brake (34) for stopping rotation of the second ring gear (46),
wherein rotation of the carrier (44) is output when either one of the first brake (33) and the second brake (34) is in an engaged state.

2. The vehicular reduction unit according to claim 1, wherein:

the first brake (33) is interposed between the case (32) and the first ring gear (45) and stops rotation of the first ring gear (45) relative to the case (32); and
the second brake (34) is interposed between the case (32) and the second ring gear (46) and stops rotation of the second ring gear (46) relative to the case (32).

3. The vehicular reduction unit according to claim 1 or 2, wherein:

the engaged states of the first brake (33) and the second brake (34) are controlled by actuators for converting electric power into mechanical energy.

4. The vehicular reduction unit according to claim 1, wherein:

the stepped pinion (43) is such that a third gear (43C) having fewer teeth than the second gear (43B) is connected on the same shaft as the first gear (43A) and the second gear (43B);
a third ring gear (47) engaged with the third gear (43C) of the stepped pinion (43) and a third brake (37) for stopping rotation of the third ring gear (47) are further provided; and
the rotation of the carrier is output when any one of the first brake (33), the second brake (34) and the third brake (37) is in the engaged state.

**Amended claims under Art. 19.1 PCT**

1. (amended) A vehicular reduction unit, comprising:

a planetary gear mechanism (31) including:

an input shaft (41) to which drive power from a drive power source (20) is input,
a sun gear (42) connected to the input shaft (41),
a stepped pinion (43) in which a first gear (43A) engaged with the sun gear (42) and a second gear (43B) having fewer teeth than the first gear (43A) are connected on the same shaft,
a first ring gear (45) engaged with the first gear (43A) of the stepped pinion (43),
a second ring gear (46) engaged with the second gear (43B) of the stepped pinion (43),
a carrier (44) connected to the stepped pinion (43) and configured to output orbital motion of the stepped pinion (43),
an output shaft (48) for outputting rotation from the carrier, and
an output gear (49) connected to the output shaft (48);
a case (32) for housing the planetary gear mechanism (31);
a first brake (33) for stopping rotation of the first ring gear (45); and
a second brake (34) for stopping rotation of the second ring gear (46);

wherein:

rotation of the carrier (44) is output to the output shaft (48) with either one of the first brake (33) and the second brake (34) set in an engaged state;
the output shaft (48) is formed as a hollow shaft through which the input shaft (41) passes; and
the output gear (49) is disposed between the planetary gear mechanism (31) and the drive power source (20).

2. The vehicular reduction unit according to claim 1, wherein:

the first brake (33) is interposed between the case (32) and the first ring gear (45) and stops rotation of the first ring gear (45) relative to the case (32); and

the second brake (34) is interposed between the case (32) and the second ring gear (46) and stops rotation of the second ring gear (46) relative to the case (32).

3. The vehicular reduction unit according to claim 1 or 2, wherein:

the engaged states of the first brake (33) and the second brake (34) are controlled by actuators for converting electric power into mechanical energy.

4. The vehicular reduction unit according to claim 1, wherein:

the stepped pinion (43) is such that a third gear (43C) having fewer teeth than the second gear (43B) is connected on the same shaft as the first gear (43A) and the second gear (43B);

a third ring gear (47) engaged with the third gear (43C) of the stepped pinion (43) and a third brake (37) for stopping rotation of the third ring gear (47) are further provided; and

the rotation of the carrier is output when any one of the first brake (33), the second brake (34) and the third brake (37) is in the engaged state.

*Fig.1*

34 — L/B

33 — H/B

45

46

43A

43B

49

20

44

41

43

42

48

M

50

*Fig.2A*

*Fig.2B*

*Fig.3A*

*Fig.3B*

Fig.4

## INTERNATIONAL SEARCH REPORT

| International application No. |
| --- |
| PCT/JP2011/050520 |

A. CLASSIFICATION OF SUBJECT MATTER
*F16H3/66*(2006.01)i

According to International Patent Classification (IPC) or to both national classification and IPC

B. FIELDS SEARCHED

Minimum documentation searched (classification system followed by classification symbols)
F16H3/66

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2002-213545 A (Aisin AW Co., Ltd.), 31 July 2002 (31.07.2002), fig. 1, 2 (Family: none) | 1-4 |
| A | JP 2005-061552 A (Toyota Motor Corp.), 10 March 2005 (10.03.2005), fig. 1 & US 2005/0043134 A1 | 1-4 |
| A | JP 7-74665 B2 (Nippon Sharyo Seizo Kaisha, Ltd.), 09 August 1995 (09.08.1995), entire text (Family: none) | 1-4 |

☒ Further documents are listed in the continuation of Box C. ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 30 March, 2011 (30.03.11) | 12 April, 2011 (12.04.11) |

| Name and mailing address of the ISA/<br>Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2011/050520 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | Microfilm of the specification and drawings annexed to the request of Japanese Utility Model Application No. 24208/1979(Laid-open No. 126049/1980) (Komatsu Ltd.), 06 September 1980 (06.09.1980), entire text (Family: none) | 1-4 |
| A | JP 49-112068 A  (Komatsu Ltd.), 25 October 1974 (25.10.1974), entire text (Family: none) | 1-4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4117950 U
- JP 2010074944 A